# EUROPEAN PATENT APPLICATION

(11) **EP 4 383 210 A1**
(43) Date of publication of application: **12.06.2024**
(21) Application number: 23152374.7
(22) Date of filing: 19.01.2023
(51) Int. Cl.: G06V 10/58, G06V 30/19

(54) **DETERMINING A TARGET VIEW**

(30) Priority: 05.12.2022 US 202263430173 P
(71) Applicant: Koninklijke Philips N.V., 5656 AG Eindhoven (NL)
(72) Inventor: LORENZ, Cristian, Eindhoven (NL); TRAHMS, Robert G, Eindhoven (NL); CANFIELD II, Earl M., 5656AG Eindhoven (NL)
(74) Representative: Philips Intellectual Property & Standards

(57) **Abstract**

A computer-implemented method for determining whether an image corresponds to a target view. The method comprises applying (102) an object detection algorithm to the image to identify one or more features in the image and comparing the identified features to a pre-determined set of rules for the target view. The set of rules defines one or more features. Comparing (104) the identified features to the pre-determined set of rules comprises obtaining a confidence score for each of the identified features, weighting one or more of the confidence scores based on the features defined in the set of rules corresponding to the target view and combining the weighted confidence scores. Determining (106) whether the image corresponds to the target view is based on the combined, weighted, confidence scores.

## Description

### FIELD OF THE INVENTION

The invention relates to the field of determining whether an image is obtained at a target view. A particular application of the invention relates to determining whether an ultrasound image corresponds to a standard view.

### BACKGROUND OF THE INVENTION

Ultrasound is the modality of choice for fetal screening as it shows fetal anatomy in sufficient detail, while at the same being cost effective with no known adverse effects. Fetal screening allows for detecting abnormalities at an early gestational age, such that therapeutically suitable interventions can be planned and performed as required. A major part of the examinations is performed at 18 to 22 weeks gestational age with specific recommended standard measurements.

These measurements are related to the size of certain bones and structures and provide an insight into the fetal growth. For these measurements, standard views are required. For instance, the abdominal circumference is measured with an axial plane containing the spine, stomach and umbilical vein and the femur length is measured using a plane containing the whole femur.

In clinical workflow of fetal screening examinations, a number of standard views need to be captured and, for a proportion of those, one or more biometrical measurements need to be performed. To do so, the user needs to navigate to the target plane, 'freeze' the plane (i.e., store a 2D image out of the stream of incoming 2D images) and perform the biometrical measurements. This means that the ultrasound scanning is repeatedly interrupted in order to perform the 'freeze' and the biometry.

Thus, there is a need to improve the method in which standard views (or, more generally, target views) are obtained.

### SUMMARY OF THE INVENTION

The invention is defined by the independent claims. Dependent claims define advantageous embodiments.

According to examples in accordance with an aspect of the invention, there is provided a computer-implemented method for determining whether an image corresponds to a target view, the method comprising:
applying an object detection algorithm to the image to identify one or more features in the image;
comparing the identified features to a pre-determined set of rules for the target view, wherein the set of rules defines one or more features and wherein comparing the identified features to the pre-determined set of rules comprises:
   obtaining a confidence score for each of the identified features;
   weighting one or more of the confidence scores based on the features defined in the set of rules corresponding to the target view; and
   combining the weighted confidence scores; and
determining whether the image corresponds to the target view based on the combined, weighted, confidence scores.

It has been realized that identifying features in an image can provide enough information to determine whether an image corresponds to a target view. This is based on comparing the identified features to a set of rules. Thus, an object detection algorithm, typically used for object detection, not scene/target view identification, can be used to identify the target view(s).

It will be appreciated that the image can be compared to multiple sets of rules thereby to determine whether the image corresponds to one of a plurality of target views.

Combining confidence scores essentially weights the identified features based on a confidence on their identification. Thus, when the object identification algorithm is not confident on the identification of a feature, the low confidence identified feature will be weighted lower than an identified feature with a higher confidence score.

Further weighting the confidence scores based on features defined in the set of rules can increase the accuracy of the combined confidence score to determine whether the image belongs to the target view. For example, the confidence score for a feature which is not defined in the set of rules and/or is explicitly defined as not being present in the target view, can be made negative.

This allows the determination of the target view to be automated. Thus, target views can be obtained during a real-time acquisition of the images without the user having to "freeze" the real-time capture of the images to identify the target view(s).

Determining whether an image corresponds to the target view may be based on obtaining confidence scores for each identified feature, combining the confidence scores for the identified features defined in the set of rules and comparing the combined confidence score to a threshold score.

For example, the object detection algorithm may output a confidence score with each identified feature.

Generally, identifying a feature would mean identifying an anatomical object (e.g., an organ, part(s) of organs, or multiple organs). However, the method could also be extended to non-anatomical structures, such as surgical instruments when working in an intra-operative setting. An instrument which needs to be reported could be required to be present in an image, e.g., if the imaging used for surgical guidance, or if the position of a clip, stent, etc.. Furthermore, a feature could include image artifacts, e.g., shadows (e.g., due to the ultrasound beam traversing bone) and such an artifact could render an image unusable for a given (e.g., biometry) task.

In one example, identifying features may comprise identifying at least one anatomical object.

The set of rules may further define at least one or more features required to be present in the target view and one or more features required not to be present in the target view.

The set of rules thereby defines which features are expected to be identified in the image and/or the relationship between identified features in the image for it to correspond to the target view. Additionally, the set of rules can define which features would not be expected in at the target view.

This further allows the determination of the target view to be automated. Thus, target views can be obtained during a real-time acquisition of the images without the user having to "freeze" the real-time capture of the images to identify the target view(s).

The method may further comprise determining weights for weighting one or more of the confidence scores, wherein determining the weights comprises receiving labelled images at the target view comprising one or more identified features and confidence scores for each identified feature in the labelled images and determining weights for the one or more identified features in the labelled images which, when combined, maximize a combined confidence score for the labelled images.

Maximizing the combined confidence score for labelled images which are known to correspond to the target view enables the weights to be more accurate for images of unknown views.

Of course, it will be appreciated that fully maximizing the combined confidence score for every labelled image may not always be possible and, often it is not possible at all. Additionally, achieving the theoretical best set of weights which maximizes the combined confidence score for the labelled images may require an unpractical amount of time and an unrealistic amount of processing resources. As such, maximizing the combined confidence scores for the labelled images should be understood as attempting to maximize the combined weights within a limited amount of time and with a limited amount of processing resources.

The method may further comprise determining, or receiving, a sensitivity score corresponding to the image, wherein comparing the identified features to a pre-determined set of rules is further based on the sensitivity score.

The sensitivity score can determine based on information of the image or information of the scene being imaged. For example, in ultrasound imaging, ultrasound images of subjects with a higher body mass index (BMI) may need a lower sensitivity score as some of the features in the set of rules may not be as clearly visible (thereby having a lower confidence score) when compared to subjects with a lower BMI.

The set of rules may further define a presence of one or more present features in the image and an absence of one or more absent features in the image.

The absence of features in the image can be used to determine which images do not correspond to the target view, regardless of whether all other expected features are present. For example, in ultrasound imaging, if a femur is present in an abdominal ultrasound image, the abdominal image can be discarded from being a standard view regardless of which other features have been identified.

Determining whether the image corresponds to the target view may comprise determining that the image does not correspond to the target view if an identified feature in the image corresponds to an absent feature in the set of rules.

The set of rules may define a relative geometry between two or more features in the image.

It has been realized that the relative geometries between features in the target view is fairly consistent. As such, the relative geometries (e.g., size, position etc.) can be used to confirm whether an image corresponds to a target view.

The relative geometry may comprise a relative position and/or a relative size between two or more features in the image.

The method may further comprise receiving a stream of images in real-time and selecting an image from the stream of images to apply the object detection algorithm.

For example, the latest available image from the stream may be selected. The object detection algorithm could then be applied periodically or as and when needed to later images.

The method may further comprise displaying the image with bounding boxes, output by the object detection algorithm, and/or the confidence scores.

In some cases, the images may be displayed without the bounding boxes and/or the confidence scores.

The image may be an ultrasound image and the target view may be a standard ultrasound view. The image may however also be a different type of medical image such as but not limited to an X-ray image, a CT image or a MR image.

Additionally, the method may further comprise measuring one or more target biometric measurements based on determining that the ultrasound image corresponds to the standard view.

The invention also provides a computer program product comprising computer program code which, when executed on a processor, causes the processor to perform the afore-mentioned method. The product may be a carrier like a (non-transitory) medium, or software that can be downloaded from a server (e.g. via the internet).

The invention also provides a system for determining whether an image corresponds to a target view, the system comprising a processor configured to perform a method as claimed or described herein. The processor may be configured to:
apply an object detection algorithm to the image to identify one or more features in the image;
compare the identified features to a pre-determined set of rules for the target view, wherein the set of rules defines one or more features and wherein the processor is configured to compare the identified features to the pre-determined set of rules by:
   obtaining a confidence score for each of the identified features;
   weighting one or more of the confidence scores based on the features defined in the set of rules corresponding to the target view; and
   combining the weighted confidence scores; and
determine whether the image corresponds to the target view based on the combined, weighted, confidence scores.

The processor may be further configured to determine, or receive, a sensitivity score corresponding to the image, wherein the processor is configured to compare the identified features to the set of rules based on the sensitivity score.

The set of rules may further define at least one or more features required to be present in the target view and one or more features required not to be present in the target view.

The processor may be further configured to determine weights for weighting one or more of the confidence scores, wherein determining the weights comprises receiving labelled images at the target view comprising one or more identified features and confidence scores for each identified feature in the labelled images and determining weights for the one or more identified features in the labelled images which, when combined with the confidence scores, maximize a combined, weighted, confidence score for the labelled images.

The set of rules may define a presence of one or more present features in the image and an absence of one or more absent features in the image.

The processor may be configured to determine whether the image corresponds to the target view by determining the image does not correspond to the target view if an identified feature in the image corresponds to an absent feature in the set of rules.

The set of rules may define a relative geometry between two or more features in the image. The relative geometry may comprise a relative position between two or more features in the image. Additionally, or alternatively, the relative geometry may comprise a relative size between two or more features in the image.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows a method for determining whether an image corresponds to a target view; and
Fig. 2 shows an ultrasound image 200 for measuring an abdominal circumference.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a computer-implemented method for determining whether an image corresponds to a target view. The method comprises applying an object detection algorithm to the image to identify one or more features in the image and comparing the identified features to a pre-determined set of rules for the target view. The set of rules defines one or more features. Comparing the identified features to the pre-determined set of rules comprises obtaining a confidence score for each of the identified features, weighting one or more of the confidence scores based on the features defined in the set of rules corresponding to the target view and combining the weighted confidence scores. Determining whether the image corresponds to the target view is based on the combined, weighted, confidence scores. The invention stems from the realization that ultrasound fetal screening workflow can be substantially sped up if an automated view recognition is used which can identify and store target frames while scanning. Further, automated versions of the biometrical measurement can be called in a further step to also automate the measurement being taken. However, a skilled person in the art will recognize that the methods disclosed herein are not limited to fetal ultrasound screening nor ultrasound images, and may also be applied in for example chest X-ray imaging and the like.

Ultimately, this could lead to an un-interrupted scanning session. While the user is maneuvering the ultrasound probe to ultimately cover all target views required for the examination, in the background, the views can be analyzed, identified, stored and fed to appropriate biometrical measurements functionality.

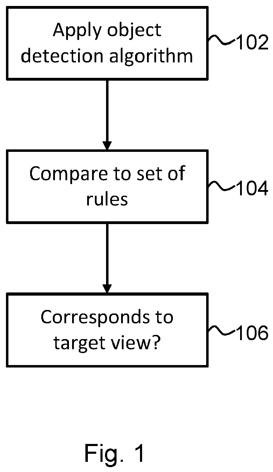

Fig. 1 shows a method for determining whether an image corresponds to a target view. In step 102, an object detection algorithm is applied to the image to detect features (e.g., objects, groups of objects, plane orientation of the image etc.) within the image. For example, the object detection algorithm may detect the presence/absence of features in the image, the relative positions between the detected features and/or the relative sizes of the detected features. Additionally, the object detection algorithm may provide confidence scores for the detected features indicating the likelihood of the detected features given by the object detection algorithm being correct.

For example, during a fetal screening, an anatomy detection network can be called. An example of an anatomy detection network could be the yolo-network which provides bounding boxes and confidence scores for a list of anatomical objects on which it was trained.

In step 104, the detected features are compared to a pre-defined set of rules for a target view. The set of rules generally defines the expected features in a target view and/or expected geometric relationships between expected features.

In the case of fetal screening, the set of rules can be derived from clinical guidelines. The set of rules can define the required anatomical content of each target view and associated relationships between the required anatomical content. The rules can include mandatory features (i.e., features which must be present), optional features (i.e., features which may be present, but are not necessary) and prohibitive features (features which should not be present).

For example, for the trans-ventricular (TV) brain plane, the posterior lateral ventricle (PLV) may be a mandatory feature, the Falx may be an optional feature and the Cerebellum may be a prohibitive feature.

Additionally, the set of rules can include confidence score thresholds if the underlying object detection algorithm can provide them. It may, in addition, include object sizes and relative locations thereof.

Further, the set of rules for a target view may provide the method by which the confidence scores are combined to check for that particular target view. In particular, the confidence scores may be weighted based on the saliency of each feature for a particular view. For example, mandatory features may have a greater weight than optional features, and prohibitive features may have a negative weight.

Generally, the set of rules for a target view is pre-determined. In order to determine an optimized set of rules, any weights between the expected features can be optimized by testing the weights with pre-labelled images and maximizing, for example, the combined, weighted, confidence scores over all labelled images.

It will be appreciated that, in most cases, there will exist a plurality of sets of rules corresponding to a plurality of target views. Thus, an image can be compared to the plurality of sets of rules to determine whether the image corresponds to any of the target views and, if so, to which target view it corresponds to.

In step 106, the detected features are compared to the set of rules to determine whether the image correspond to the target view. The comparison may comprise ensuring that all required/mandatory features are present. The comparison may also comprise ensuring that all prohibitive features are not present. The comparison may further comprise combining all the confidence scores of the detected features in the image, where each confidence may be weighted according to the set of rules it is being compared to.

For example, in the case of a real-time ultrasound screening, for each new frame (or every 2^{nd} frame, 3^{rd} frame etc., depending on the frame rate and/or processing power) the detected anatomies are compared with the set(s) of rules. If, for one of the target views, all required rules are fulfilled, the frame can be automatically processed according to the target view type.

Different types of automated processing can be implemented on the frame. These range from just making the user aware of the identification (e.g., displaying a respective icon), asking the user for acknowledgement before proceeding further or proceeding automatically with any relevant measurement and, optionally, populating an examination report.

Thus, the method essentially provides an automated view identification for the images. This is based on the realization that view identification can be achieved by the use of an object detection algorithm which is typically used for objected identification/detection and, by itself, cannot be used for view identification.

The following exemplary view types are typical standard (target) views in fetal screening examinations:

| **View type** | **Visible anatomy** | **Biometrical measurement** |
|---|---|---|
| Trans-thalamic brain plane (TT) | - Thalamus | - Head circumference |
| | - Falx | |
| | - Cavum septum pelucidum (CSP) | |
| Trans-ventricular brain plane (TV) | - Posterior lateral ventricle (LPV) | - PLV diameter |
| | - Choroid | |
| | - Falx | |
| | - CSP | |
| Trans-cerebellar brain plane (TC) | - Cerebellum | - Trans-cerebellar diameter (TCD), |
| | - Cisterna magna (CM) | - CM diameter |
| | - CSP | |
| Abdominal circumference plane | - Spine, | - abdominal circumference (AC) |
| | - Stomach | |
| | - Umbilical vein | |
| Femur biometry plane | - Femur | - Femur-length |

Each of the features provided in the "visible anatomy" column may be a mandatory feature or an optional feature in the set of rules for the corresponding target views. The "biometrical measurement" column presents the measurements which are typically performed from the corresponding target views.

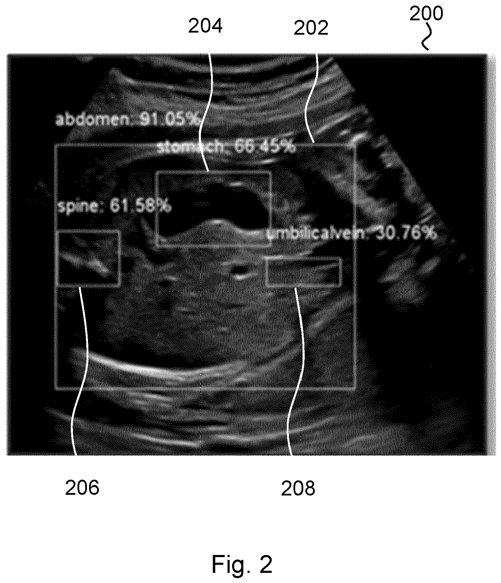

Fig. 2 shows an ultrasound image 200 for measuring an abdominal circumference. The ultrasound image 200 is overlaid with four bounding boxes 202, 204, 206 and 208, each corresponding to a feature detected in the ultrasound image 200 by an object detection algorithm which, in this case, is a yolo network. The expression "yolo" means: you only look once.

The first, largest, bounding box 202 corresponds to the abdomen box and has a confidence score of 91.05%. The second bounding box 204 corresponds to the stomach and has a confidence score of 66.45%. The third bounding box 206 corresponds to the spine and has a confidence score of 61.58%. The fourth bounding box 208 corresponds to the umbilical vein and has a confidence score of 30.76%.

The set of rules for the abdominal circumference plane may require that the stomach, the spine, and umbilical vein are all present and within the abdominal box. As can be seen in Fig. 2, this is the case in the ultrasound image 200. Thus, the rules may specify that the confidence scores of, for example, the spine, the stomach, and the umbilical vein are combined to determine a combined confidence score. The combined confidence score may then be compared to a confidence threshold for the abdominal circumference plane to determine whether the ultrasound image 202 is in the abdominal circumference plane.

In some cases, the particular nature of the environment in which the image is taken may affect the confidence scores. For example, in ultrasound imaging in general, subjects with a high body mass index (BMI) are generally not easy to image and the resulting ultrasound frames may not provide high confidence scores overall. In these cases, a sensitivity score may be reduced. The reduction in the sensitivity score may ease the requirements of the set of rules (e.g., it may lower the confidence score threshold or reduce the number of mandatory features).

The skilled person would be readily capable of developing a processor for carrying out any herein described method. Thus, each step of a flow chart may represent a different action performed by a processor, and may be performed by a respective module of the processing processor.

The set of rules used to identify the target images may be set manually by a designer of the system (e.g. a clinician). However, the rules themselves may be optimized using a machine learning algorithm by training the machine learning algorithm using standard views and views that are not the standard views. The system may indicate to the user the rules that have been applied to the identify the different target views.

The user may have the option to adapt the rules, for example relax the rules (e.g., only requiring lower confidence scores) if an ultrasound examination is not finding the target views based on the existing sets of rules. This may for example be needed in difficult to image cases, such as obese patients as mentioned above.

As discussed above, the system makes use of a processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

Measures recited in mutually different dependent claims may advantageously be combined.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. A computer-implemented method for determining whether an image (200) corresponds to a target view, the method comprising:
applying (102) an object detection algorithm to the image to identify one or more features in the image;
comparing (104) the identified features to a pre-determined set of rules for the target view, wherein the set of rules defines one or more features and wherein comparing the identified features to the pre-determined set of rules comprises:
obtaining a confidence score for each of the identified features;
weighting one or more of the confidence scores based on the features defined in the set of rules corresponding to the target view; and
combining the weighted confidence scores; and
determining (106) whether the image corresponds to the target view based on the combined, weighted, confidence scores.

2. The method of claim 1, wherein the set of rules further defines at least one or more features required to be present in the target view and one or more features required not to be present in the target view.

3. The method of claims 1 or 2, further comprising determining weights for weighting one or more of the confidence scores, wherein determining the weights comprises:
receiving labelled images at the target view comprising one or more identified features and confidence scores for each identified feature in the labelled images; and
determining weights for the one or more identified features in the labelled images which, when combined, maximize a combined confidence score for the labelled images.

4. The method of any of claims 1 to 3, further comprising determining, or receiving, a sensitivity score corresponding to the image, wherein comparing the identified features to a pre-determined set of rules is further based on the sensitivity score.

5. The method of any of claims 1 to 4, wherein the set of rules defines a presence of one or more present features in the image and an absence of one or more absent features in the image.

6. The method of claim 5, wherein determining whether the image corresponds to the target view comprises determining that the image does not correspond to the target view if an identified feature in the image corresponds to an absent feature in the set of rules.

7. The method of any of claims 1 to 6, wherein the set of rules defines a relative geometry between two or more features in the image.

8. The method of claim 7, wherein the relative geometry comprises a relative position and/or a relative size between two or more features in the image.

9. The method of any one of claims 1 to 8, further comprising receiving a stream of images in real-time and selecting an image from the stream of images to apply the object detection algorithm.

10. The method of any one of claims 1 to 9, further comprising displaying the image with bounding boxes (202, 204, 206, 208), output by the object detection algorithm, and/or the confidence scores.

11. The method of any of claims 1 to 10, wherein the image is an ultrasound image and the target view is a standard ultrasound view.

12. A computer program product comprising computer program code which, when executed on a processor, causes the processor to perform the method according to any of the preceding claims.

13. A system for determining whether an image corresponds to a target view, the system comprising a processor configured to carry out the method according to any of claims 1 to 11.
